Europäisches Patentamt

European Patent Office

Office européen des brevets

(11) Numéro de publication: **0 310 508**
A2

# (12) DEMANDE DE BREVET EUROPEEN

(21) Numéro de dépôt: **88402456.3**

(22) Date de dépôt: **28.09.88**

(51) Int. Cl.⁴: **B 23 D 45/00**
B 23 D 59/00
// B24B27/06

(30) Priorité: **29.09.87 FR 8713465**

(43) Date de publication de la demande:
**05.04.89 Bulletin 89/14**

(84) Etats contractants désignés:
**AT BE CH DE ES FR GB IT LI NL SE**

(71) Demandeur: **LA FRANCAISE METALLURGIE**
**15, place de la Nation**
**F-75011 Paris (FR)**

(72) Inventeur: **Fallon, Régis**
**40, rue Charles Olliers**
**F-94170 Le Perreux sur Marne (FR)**

(74) Mandataire: **Netter, André et al**
**Cabinet NETTER 40, rue Vignon**
**F-75009 Paris (FR)**

(54) Bâti avec table pour tronçonneuse ou meuleuse à main.

(57) Le dispositif comprend un bâti (1), des moyens (25) pour fixer une pièce à tronçonner (26) sur le bâti, un bras support (7) muni de moyens de fixation rigide pour une meuleuse à main (14), et un coulisseau (5) pouvant exécuter par rapport au bâti un mouvement de translation perpendiculaire à l'axe de rotation de la meuleuse, et sur lequel le bras support est articulé autour d'un axe (8) parallèle audit axe de rotation.

FIG.1

EP 0 310 508 A2

Bundesdruckerei Berlin

## Description

### Bâti avec table pour tronçonneuse ou meuleuses à main

L'invention concerne un dispositif permettant de tronçonner une pièce à l'aide d'une meuleuse à main.

DE-A-3 444 795 décrit un tel dispositif, comprenant un bâti et un support muni de moyens de fixation rigide pour une meuleuse à main.

Le but de l'invention est de permettre un positionnement facile et précis de la meuleuse par rapport au bâti.

Selon l'invention, les moyens de fixation comprennent un siège propre à coopérer avec le boîtier de la meuleuse dans une zone annulaire entourant l'arbre de sortie de celle-ci, et des moyens d'appui pour solliciter ledit boîtier contre ledit siège.

De préférence, les moyens d'appui agissent sur le boîtier dans une zone située sensiblement sur l'axe de l'arbre de la meuleuse, à l'opposé de sa sortie du boîtier.

Selon un mode de réalisation de l'invention, les moyens d'appui comprennent une potence dépendant du support et recevant une vis qui vient s'appuyer sur le boîtier.

L'invention prévoit également une bague de centrage amovible définissant le siège pour le boîtier et reçue elle-même sur le support.

Le dispositif comprend en outre avantageusement des moyens pour fixer une pièce à tronçonner sur le bâti, et des moyens pour déplacer le support par rapport au bâti selon un plan perpendiculaire à l'axe de rotation de la meuleuse.

Selon une caractéristique préférée de l'invention, les moyens pour déplacer le support comprennent un coulisseau pouvant exécuter par rapport au bâti un mouvement de translation perpendiculaire à l'axe de rotation, et des moyens d'articulation du support par rapport au coulisseau autour d'un axe parallèle à l'axe de rotation.

Le bâti peut comprendre une table s'étendant selon un plan parallèle à la direction de translation du coulisseau et à l'axe de pivotement du support.

D'autres caractéristiques et avantages de l'invention ressortiront de la description détaillée donnée ci-après d'un exemple de réalisation, et des dessins annexés dans lesquels :

- la figure 1 est une vue en perspective d'un dispositif de tronçonnage selon l'invention, sur lequel sont montées une meuleuse et une pièce à tronçonner ; et

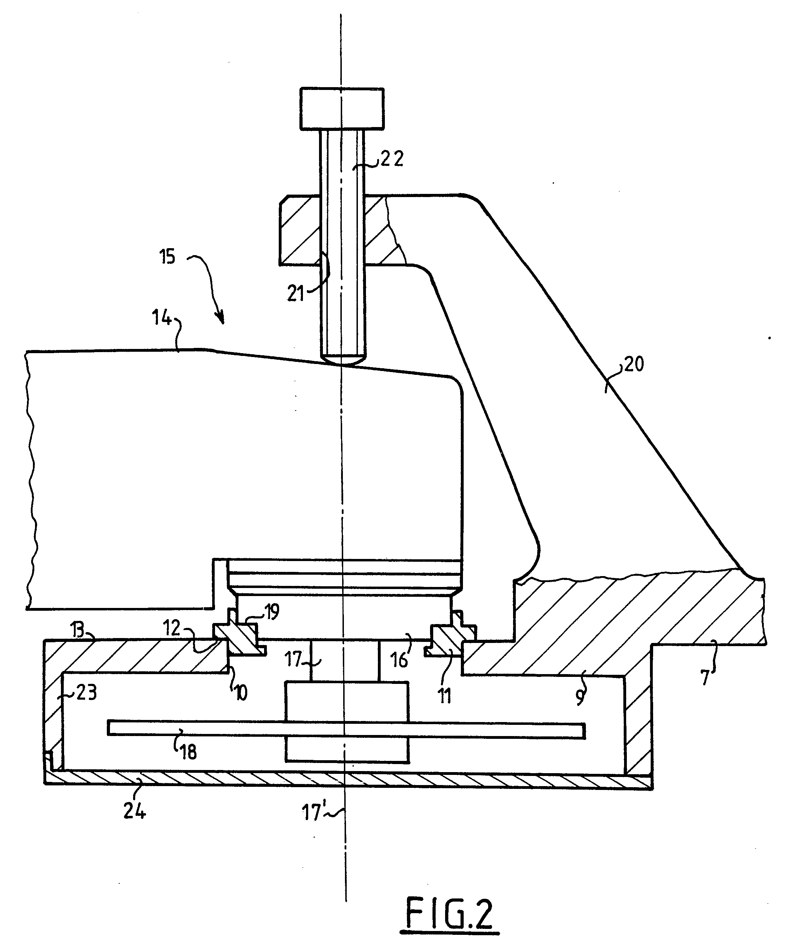

- la figure 2 est une vue partielle en coupe selon la ligne II-II de la figure 1.

Le dispositif de tronçonnage illustré comprend un bâti 1 formé essentiellement d'une table plane rectangulaire 2 destinée à être disposée horizontalement et d'un montant 3 fixé rigidement à la table 2 en une zone située sensiblement à mi-longueur de l'un des petits côté 4 du contour rectangulaire de la table. Le montant 3 s'élève au-dessus de la table 2.

Le montant 3 est traversé à sa partie supérieure par un coulisseau 5 de profil par exemple rectangulaire, qui s'étend dans la direction longitudinale de la table 2, donc horizontalement et est ajusté dans un logement du montant 3 de façon à pouvoir exécuter seulement un mouvement de translation dans cette direction.

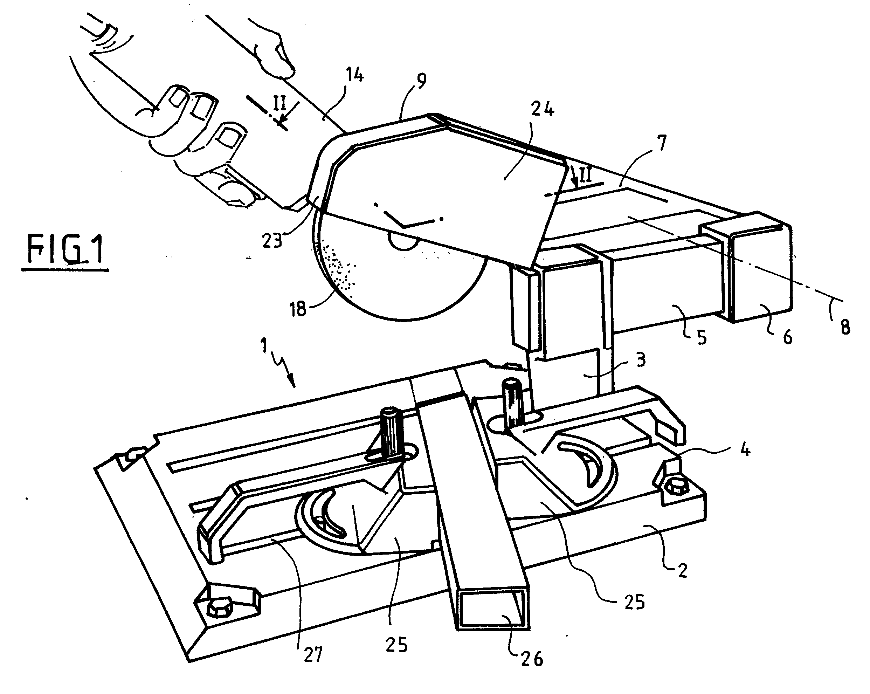

A son extrémité tournée vers l'extérieur de la table par rapport au montant 3, le coulisseau 5 comporte une tête 6 de section transversale plus grande que celle du reste du coulisseau, et qui vient en butée contre le montant 3 pour limiter le mouvement du coulisseau en direction de la table (vers la gauche à la figure 1).

Un bras support 7 est articulé sur la tête 6 par des moyens appropriés autour d'un axe 8 orienté selon la largeur de la table 2, c'est-à-dire horizontalement et perpendiculairement à la direction longitudinale et de translation du coulisseau 5. Le bras support 7 est terminé par une partie formant carter 9 et s'étend vers la gauche de la figure 1 à partir de l'axe 8 de façon que le carter 9 se trouve au-dessus de la table 2 pour toutes les positions du coulisseau 5 par rapport au montant 3.

Le bras 7 peut pivoter autour de l'axe 8 entre une position basse, dans laquelle il s'étend à peu prés horizontalement de façon que le carter 9 se situe dans le prolongement du coulisseau 5, et une position haute, illustrée à la figure 1, dans laquelle il s'élève d'un angle de l'ordre de 20 à 30°, le carter 9 étant dans une position plus haute que le coulisseau 5. Avantageusement, les moyens d'articulation comprennent un organe de rappel tel qu'un ressort non représenté sollicitant le bras support 7 vers sa position haute. Par ailleurs, la longueur du bras support est telle que, dans sa position basse, le carter 9 soit sensiblement adjacent à l'extrémité du coulisseau 5. De cette façon, la course de ce dernier est maximale pour un encombrement donné du dispositif.

Le carter 9 a une forme générale en cuvette dont le fond, qui s'étend selon le plan de la figure 1, c'est-à-dire perpen ture circulaire 10. Une bague amovible 11 s'ajuste dans l'ouverture 10 et s'appuie par un épaulement 12 sur la face extérieure 13 du fond de la cuvette 9. Le boîtier 14 d'une meuleuse à main 15 coopère avec la bague 11 par une collerette annulaire 16 entourant l'arbre de sortie 17 de la meuleuse qui porte un disque de tronçonnage 18. A cet effet, la collerette 16 s'appuie sur un épaulement interne 19 de la bague 11 et est centrée dans celle-ci par deux portions de surface cylindrique de révolution adjacentes à cet épaulement 19.

Une potence 20 appartenant, comme le carter 9, au bras support 7 s'étend de façon à se terminer à une certaine distance du fond du carter en vis-à-vis de la face extérieure 13 de ce fond. La potence 20 présente un trou fileté 21 coaxial à l'ouverture 10 et dans lequel s'engage une vis 22 dont l'extrémité s'appuie contre le boitier 14 de la meuleuse, à l'opposé de la sortie de l'arbre 17, de façon à immobiliser fermement la meuleuse contre le carter par l'intermédiaire de la bague 11, dans une position où le disque 18 s'étend selon une direction de plan perpendiculaire à l'axe d'articulation 8, l'axe 17' de l'arbre de sortie 17 étant parallèle à cet axe 8.

Par construction de la meuleuse 15, le corps du boitier 14 s'étend à peu près perpendiculairement à l'axe 17'. Ce corps est fixé de façon à s'éloigner de l'axe 8 à partir de la collerette 16.

Le carter 9 présente une paroi latérale 23 sur laquelle vient s'appliquer un couvercle amovible 24. Le carter avec son couvercle entoure partiellement le disque 18 en laissant dégagée la partie de celui-ci tournée vers la table 2 de façon à permettre le tronçonnage.

Le dispositif selon l'invention comprend en outre des moyens 25 pour fixer sur la table 2 une pièce à tronçonner 26. Ces moyens de fixation peuvent être montés de façon classique en utilisant des rainures en T 27 prévues dans l'épaisseur de la table.

Pour réaliser le tronçonnage d'une pièce, on saisit le corps du boitier 14 de la meuleuse, et, en agissant sur celui-ci, on déplace conjointement le bras support 7 et la meuleuse qui en est solidaire, en pivotement autour de l'axe 8 et en translation par rapport au montant 3. Lors de ce déplacement, le disque 18 de la meuleuse reste dans un même plan, de façon à réaliser un tronçonnage net.

Il peut être prévu plusieurs bagues 11 dont les surfaces internes sont conjuguées des collerettes de différentes meuleuses et permettant d'adapter ces différentes meuleuses sur un même bras support.

Il est également possible de supprimer la bague 11 lorsque le bras support est prévu pour recevoir un seul type de meuleuse, le bras support comportant alors un siège conjugué de la collerette de la meuleuse.

**Revendications**

1.- Dispositif de tronçonnage comprenant un bâti (1) et un support (7) muni de moyens de fixation rigide (10,11,22) pour une meuleuse à main (15), caractérisé en ce que les moyens de fixation pour la meuleuse comprennent un siège (19) propre à coopérer avec le boîtier (14) de la meuleuse dans une zone annulaire (16) entourant l'arbre de sortie (17) de celle-ci, et des moyens d'appui (20,22) pour solliciter ledit boîtier contre ledit siège.

2.- Dispositif selon la revendication 1, caractérisé en ce que les moyens d'appui agissent sur le boîtier dans une zone située sensiblement sur l'axe (17') dudit arbre, à l'opposé de sa sortie du boîtier.

3.- Dispositif selon la revendication 2, caractérisé en ce que les moyens d'appui comprennent une potence (20) dépendant du support (7) et recevant une vis (22) qui vient s'appuyer sur le boîtier (14).

4.- Dispositif selon l'une des revendications 1 à 3, caractérisé en ce que les moyens de fixation pour la meuleuse comprennent une bague de centrage amovible (11) définissant ledit siège et reçue sur le support (7).

5.- Dispositif selon l'une des revendications précédentes, caractérisé en ce qu'il comprend des moyens pour fixer une pièce à tronçonner sur le bâti, et des moyens (5,8) pour déplacer le support (7) par rapport au bâti selon un plan perpendiculaire à l'axe de rotation (17') de la meuleuse.

6.- Dispositif selon la revendication 5, caractérisé en ce que les moyens pour déplacer le support comprennent un coulisseau (5) pouvant exécuter par rapport au bâti un mouvement de translation perpendiculaire audit axe de rotation, et des moyens d'articulation du support sur le coulisseau autour d'un axe (8) parallèle audit axe de rotation.

7.- Dispositif selon la revendication 6, caractérisé en ce que le bâti (1) comprend une table (2) s'étendant selon un plan parallèle à la direction de translation du coulisseau (5) et à l'axe de pivotement (8) du support (7).

FIG1

$\underline{FIG.2}$